## Europäisches Patentamt

## European Patent Office

## Office européen des brevets

(19)

(11) Veröffentlichungsnummer: **0 165 394**
**B1**

(12) **EUROPÄISCHE PATENTSCHRIFT**

(45) Veröffentlichungstag der Patentschrift:
**13.07.88**

(51) Int. Cl.⁴: **B 62 D 1/18**

(21) Anmeldenummer: **85104369.5**

(22) Anmeldetag: **11.04.85**

(54) **Bauelement zur Übertragung von Drehmomenten.**

(30) Priorität: **23.05.84 DE 3419176**

(43) Veröffentlichungstag der Anmeldung:
**27.12.85 Patentblatt 85/52**

(45) Bekanntmachung des Hinweises auf die Patenterteilung:
**13.07.88 Patentblatt 88/28**

(84) Benannte Vertragsstaaten:
**DE FR GB IT SE**

(56) Entgegenhaltungen:
**EP - A - 0 053 284**
**EP - A - 0 055 364**
**EP - A - 0 091 671**
**DE - A - 1 655 598**

(73) Patentinhaber: **Messerschmitt-Bölkow-Blohm Gesellschaft mit beschränkter Haftung, Robert-Koch-Strasse, D-8012 Ottobrunn (DE)**

(72) Erfinder: **Brunsch, Klaus, Asternweg 11, D-8190 Wolfratshausen/Weidach (DE)**
Erfinder: **Sappl, Peter, Am Tratberg 33, D-8164 Hausham (DE)**
Erfinder: **Bongers, Bernd, Nelkenweg 2, D-8016 Heimstetten (DE)**

ACTORUM AG

## Beschreibung

Die Erfindung bezieht sich auf ein Bauelement zur Übertragung von Drehmomenten zwischen in einem Winkel zueinander stehender Wellen, insbesondere für eine Sicherheitslenkung mit abgeknickter Lenksäule, nach dem Oberbegriff des Anspruchs 1.

Um zu vermeiden, dass bei einem Aufprallunfall in Folge der Verformung des Vorderteils des Fahrzeuges die starre Lenksäule in den Innenraum getrieben wird, werden in der Praxis Lenksäulen verwendet, die zweimal abgeknickt und an den Knickstellen mit Kardangelenken versehen sind. Sicherheitslenksäulen nach diesem Prinzip erfordern jedoch eine aufwendige und daher teure Konstruktion.

Bei einem anderen in der Praxis verwendeten Typ von Sicherheitslenkungen ist ein Teil der Lenksäule als gitterförmige Hülse ausgebildet, die sich bei einem Aufprallunfall unter Einwirkung einer vorbestimmten Kraft verkürzt. Die gitterförmige Hülse kann dabei als Wickelkörper aus faserverstärktem Kunststoff mit Gitterstäben aus Lagen eines kreuzweise gewickelten kunststoffgetränkten Faserstrangs ausgebildet sein (DE 30 45 151-C2). Der Orientierungswinkel der Gitterstäbe gegenüber der Längsachse des Wickelkörpers beträgt dabei vorzugsweise zwischen 45° und 55°, da beim verfolgten Anwendungszweck eher eine geringe Längsfestigkeit als eine geringe Biegesteifigkeit erwünscht ist.

Die bekannte gitterförmige Hülse ist daher relativ biegesteif, so dass sie lediglich im Bereich der Fertigungstoleranzen Winkelfehler auszugleichen in der Lage ist.

Aus der EP-A-0 091 671 ist ein Bauelement der im Oberbegriff des Anspruchs 1 genannten Art bekannt. Der Orientierungswinkel der Gitterstäbe gegenüber der Längsachse des Wickelkörpers beträgt dabei 55° oder weniger. Zur Winkelbeweglichkeit des Bauteils ist ein Axialabschnitt des Wickelkörpers wellförmig ausgebildet. Die Herstellung eines Wickelkörpers mit einem solchen wellförmigen Abschnitt ist jedoch relativ aufwendig. Auch ist die Winkelbeweglichkeit eines solchen Abschnitts sehr begrenzt.

Der Erfindung, wie sie in den Ansprüchen gekennzeichnet ist, liegt die Aufgabe zugrunde, ein Bauelement zur Übertragung von Drehmomenten zwischen in einem Winkel zueinanderstehender Wellen, insbesondere für eine abgeknickte Sicherheitslenksäule, anzugeben, das mit geringen Kosten herstellbar und dennoch hohe Drehmomente zu übertragen in der Lage ist, insbesondere alle an diesen Typ von Sicherheitslenksäulen zu stellenden Anforderungen erfüllt.

Durch die Ausbildung als Wickelkörper aus einem kunststoffgetränkten Faserstrang ist das erfindungsgemässe Bauteil schnell mit einer herkömmlichen Wickelmaschine herstellbar. Zusätzlich weist es ein geringes Gewicht auf, jedenfalls ein erheblich geringeres Gewicht als das bekannte zwei Kardangelenke aufweisende Bauelement für abgeknickte Sicherheitslenksäulen. Im Gegensatz zu dem bekannten Bauelement arbeitet das erfindungsgemässe Bauelement ferner während seiner gesamten Lebensdauer spiel- und reibungsfrei. Da es zusätzlich in Längsrichtung stark verformbar ist, kann das erfindungsgemässe Bauteil z.B. beim Einbau in eine derartige Sicherheitslenksäule bei einem Aufprallunfall gegebenenfalls auch auftretende Axialkräfte aufnehmen.

Das erfindungsgemässe Bauelement ist jedoch nicht auf den Einbau in abgeknickte Sicherheitslenksäulen beschränkt, vielmehr kann es ganz allgemein dort eingesetzt werden, wo Drehmomente zwischen in einem Winkel zueinanderstehenden Wellen zu übertragen sind. So kann das erfindungsgemässe Bauelement als biegeweiche torsionssteife Steuerwelle zur Blattwinkelsteuerung von solchen Hubschrauberrotorblättern verwendet werden, die nach der modernen Bauweise biegesteife torsionsweiche Rotorblattanschlüsse besitzen.

Nachstehend ist eine Ausführungsform des erfindungsgemässen Bauelements anhand der Zeichnung näher erläutert. Darin zeigen:

Figur 1 die Ansicht eines zwischen dem Lenkgetriebe und der Lenkspindel einer Sicherheitslenkung eingebauten Bauelements;

Figur 2 eine Draufsicht auf einen Dorn zum wickeln des Wickelkörpers des Bauelements;

Figur 3 einen Schnitt entlang der Linie III–III in Figur 2;

Figur 4 den Ausschnitt A aus Figur 3 in vergrösserter Wiedergabe;

Figur 5 einen Schnitt durch das Bauelement ohne Wickelkörper; und

Figur 6 einen Schnitt entlang der Linie V–V in Figur 5, jedoch mit Wickelkörper.

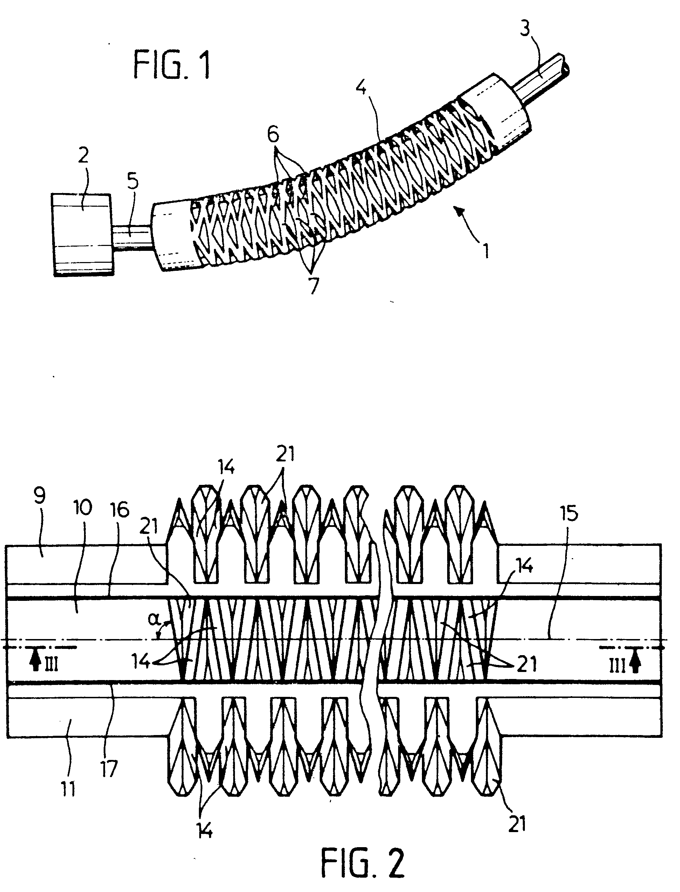

Gemäss Figur 1 ist das erfindungsgemässe Bauelement 1 zwischen dem Lenkgetriebe 2 und der Lenkspindel 3 einer Sicherheitslenkung vorgesehen. Das Bauelement 1 weist einen biegeweichen Wickelkörper 4 aus faserverstärktem Kunststoff auf, der eine offene gitterförmige Struktur besitzt.

Die Antriebswelle 5 des Lenkgetriebes und die Lenkspindel 3 stehen zueinander in einem Winkel von beispielsweise 35°. Es ist ersichtlich, dass bei einer Verformung des Vorderteils des Kraftfahrzeuges und damit einer Verschiebung des Lenkgetriebes nach hinten in Folge eines Crash-Falls, also eines Aufprallunfalls, es dabei lediglich zu einer stärkeren Biegung des Wickelkörpers kommt, nicht jedoch zu einer Übertragung der Längskräfte der Getriebewelle 5 auf die Lenkspindel 3, so dass verhindert ist, dass die Lenkspindel 3 in den Innenraum des Kraftfahrzeuges getrieben wird.

Der gitterförmige Wickelkörper 4 wird dadurch hergestellt, dass mit einem Kunstharz-Bindemittel getränkte Faserstränge oder Rovings auf einen im Querschnitt gleichmässig polygonalen oder kreisförmigen Wickeldorn einer Wickelmaschine nach bekannten Techniken aufgewickelt werden. Die Gitterstruktur entspricht dabei einem Mehrfachwickelmuster ohne Fortschrittsgrad, d.h. die Faserstränge werden lageweise übereinander abgelegt.

Die Gitterstäbe 6, d.h. die Abschnitte der Faserstranglagen zwischen zwei benachbarten Kreuzungsstellen 7, weisen bei dem erfindungsgemässen Bauelement einen Orientierungswinkel gegenüber der Längsachse von mehr als 55°, vorzugsweise von 70 bis 85° auf. Weiterhin ist bei dem erfindungsgemässen Bauteil vorgesehen, dass die Höhe der Gitterstäbe 6, d.h. ihre Erstreckung in radialer Richtung, grösser und zwar vorzugsweise dreimal bzw. ganz besonders bevorzugt zehnmal grösser ist als ihre Breite.

Ein derart grosser Orientierungswinkel und derart hohe Gitterstäbe 6 sind jedoch mit einem herkömmlichen Wickeldorn nicht, jedenfalls nur sehr schwer herstellbar.

Zur Herstellung des Wickelkörpers 4 des erfindungsgemässen Bauelements 1 wird daher der in Figur 2 bis 4 dargestellte Wickeldorn verwendet.

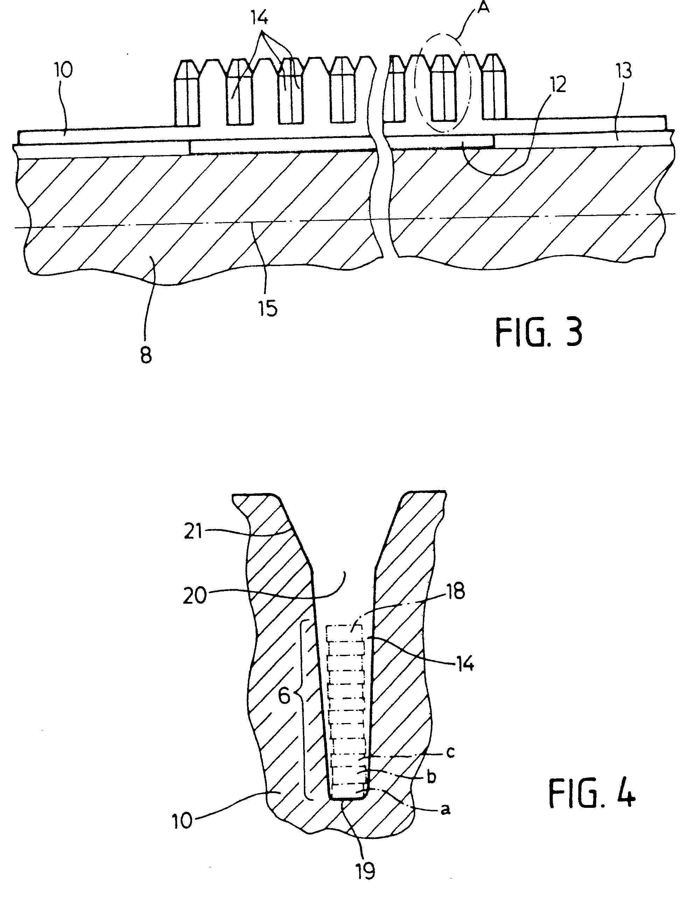

Der Wickeldorn besteht dabei aus einem Kern 8, um den Formleisten 9, 10 und 11 herum angeordnet sind. Mit dem in Figur 2 bis 4 dargestellten Wickeldorn soll ein Wickelkörper in Form eines im Querschnitt regelmässigen Sechsecks hergestellt werden. Demgemäss ist der Kern 8 im Querschnitt sechseckig ausgebildet, wobei die Formleisten 9 bis 11 jeweils auf einer der sechs Flächen am Umfang zwischen den Kanten des Kerns 8 liegen. Bei der in Figur 2 dargestellten Draufsicht auf den Dorn sind von den sechs Formleisten allerdings nur die oberen drei Formleisten 9 bis 11 zu sehen. Zur Fixierung in Umfangsrichtung sind die Formleisten mit einer Feder 12 versehen, die in eine entsprechende Längsnut 13 im Kern 8 eingreift, wie aus Figur 3 ersichtlich.

Jede Formleiste 9 bis 11 ist mit einer Vielzahl von Nuten 14 versehen. Die Nuten 14 verlaufen zur Längsachse 15 des Kerns 8 mit einem Orientierungswinkel α von ca. 80°, und zwar die eine Hälfte von Nuten 14 unter einem Winkel von +80° und die andere Hälfte unter einem Winkel von −80°. An den Kanten 16 und 17 des Dorns bzw. den beiden Längsseiten jeder der Formleisten 9 bis 11 laufen die Nuten 14 V-förmig zusammen, wobei die Spitzen des V alternierend auf der einen bzw. der anderen Längsseite der betreffenden Formleiste liegen.

In den Nuten 14 wird beim Wickeln des Wickelkörpers 4 der kunststoffgetränkte Faserstrang abgelegt. Auf diese Weise besitzen die Gitterstäbe 6 einen Orientierungswinkel von 80°. Weiterhin werden die Kreuzungsstellen 7 des Wickelkörpers 4 an den Kanten 16 und 17 des Dorns, d.h. an den Stellen der Formleisten 9 bis 11, an denen zwei Nuten 14 V-förmig zusammenlaufen, gebildet.

Gemäss Figur 4 weisen die Nuten 14 dabei eine Breite auf, die der Breite des Faserstrangs 18 entspricht. Weiterhin ist die Höhe der Nuten 14 um ein Vielfaches grösser als deren Breite. Es wird also im Ergebnis ein Gitterstab 6 erhalten, dessen Breite der Breite der Nut 14 und dessen Höhe maximal der Tiefe der Nut 14 entspricht. Da ferner der Faserstrang 18 verhältnismässig dünn ist, werden so eine sehr grosse Zahl von Faserstranglagen a, b, c usw. in der Nut 14 abgelegt, wie in Figur 4 angedeutet.

Jede Nut 14 ist so ausgebildet, dass ihre Breite von Nutgrund 19 nach aussen, also zur Nutöffnung 20 hin leicht zunimmt. An die Nutöffnung 20 schliesst sich ein Abschnitt 21 an, der zur Erleichterung des Einführens des Strangs 18 in die Nut 14 besonders stark sich nach aussen öffnet, wie in Figur 4 dargestellt.

Nach dem Wickeln des Faserstranges 18 in die Nuten 14 der Formleisten 9 bis 11 und dem Aushärten des Faserstranges 18 wird der Wickelkörper 4 in der Weise entformt, dass der Sechskantkern 8 herausgezogen wird und anschliessend die Formleisten 9 bis 11 in das Innere des Wickelkörpers 4 gedrückt und dann herausgezogen werden. Die Entformung wird durch die leichte Zunahme der Breite jeder Nut 14 zwischen Nutgrund 19 und Nutöffnung 20 erleichtert.

Durch die relativ grosse Höhe gegenüber der Breite ist jeder Gitterstab 6 bei Belastung quer seiner Längsrichtung verhältnismässig biegeweich und damit auch der Wickelkörper 4.

Weiterhin ist ersichtlich, dass bei dem vorstehend beschriebenen Sechskantwickelkörper drei Kreuzungsstellen 7 in einer Radialebene angeordnet sind. Die Biegeweichheit der Gitterstäbe 6 lässt sich dabei dadurch vergrössern, dass in einer Radialebene möglichst wenig, z.B. nur zwei Kreuzungsstellen 7 vorgesehen sind und damit die Länge der Gitterstäbe 6 zwischen zwei benachbarten Kreuzungsstellen 7 entsprechend vergrössert ist. Allerdings geht die Erhöhung der Biegeweichheit der Gitterstäbe 6 bzw. des Wickelkörpers 4 zu Lasten seiner Festigkeit, da einerseits insgesamt weniger Schubbelastung aufnehmende Kreuzungsstellen 7 und andererseits, bezogen auf die Querschnittsfläche des Wickelkörpers 4, weniger faserverstärktes Kunststoffmaterial vorhanden ist.

Weiterhin hat sich gezeigt, dass bei dem zwischen dem Lenkgetriebe 2 und der Lenkspindel 3 angeordneten Wickelkörper 4 sich die erforderliche Biegeweichheit nur erreichen lässt, wenn ein möglichst grosser Orientierungswinkel gegenüber der Längsachse des Wickelkörpers 4 gewählt wird. Bei einem Orientierungswinkel von 55° oder weniger tritt nämlich durch Vergrösserung des Querschnitts bei grossen Verformungen eine Versteifung auf, während bei grösseren Orientierungswinkeln, z.B. bei 80°, fast keine Querschnittsvergrösserung mehr vorliegt.

Ausserdem hat sich gezeigt, dass durch die offene Gitterstruktur des Wickelkörpers 4 die Gitterstäbe 6 bei Torsionsbelastung des Wickelkörpers als reine Druck- bzw. Zugstäbe wirken, also keine Schubbelastung erfahren. Die Schubbelastung wird vielmehr nur in den Kreuzungsstellen 7 wirksam, und zwar im wesentlichen unabhängig davon, welchen Orientierungswinkel die Gitterstäbe 6 gegenüber der Längsachse des Wickelkörpers 4 einnehmen. Eine derartige Gitterstruktur verhält sich also grundsätzlich anders als ein geschlossenes gewickeltes Rohr, das bekanntlich bei einem Faserstrangverlauf von 45° gegenüber der Rohrlängsachse die maximale Torsionsbelastung aufzunehmen imstande ist, während bei einem grösseren Winkel des Faserstranges zunehmend eine Schubbelastung ausgeübt wird.

Bei höherer Torsionsbelastung, d.h. bei der Übertragung grösserer Drehmomente hat sich herausgestellt, dass bei relativ grosser Biegeweichheit des Wickelkörpers 4 die Tendenz besteht, dass der Wickelkörper 4 seitlich ausweicht. Diese Tendenz dürfte im wesentlichen auf der gleichen Ursache beruhen, wie die Bildung einer Schlinge beim Verdrillen eines Drahtes oder eines Schlauches.

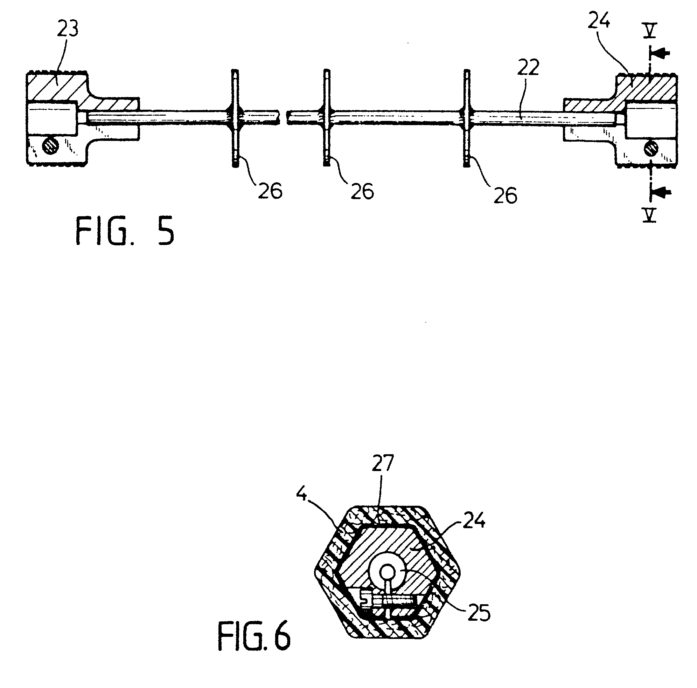

Um dieser Tendenz entgegenzuwirken, ist in der Längsachse des Wickelkörpers 4 ein Stab 22 vorgesehen, der, wie aus Figur 5 ersichtlich, an Anschlussteilen 23 und 24 befestigt ist. Die Anschlussteile 23 und 24 weisen dabei jeweils eine Bohrung 25 mit einem Schlitz auf, um eine koaxiale Verbindung der Anschlusteile 23 und 24 mit der Antriebswelle 5 des Lenkgetriebes 2 bzw. der Lenkspindel 3 zu ermöglichen (Figur 6).

Auf dem Stab 22 sind im Abstand voneinander scheibenförmige Abstützungen 26 vorgesehen, die an der einen Seite des in Figur 5 nicht dargestellten Wickelkörpers 4 anliegen. Der Stab 22 muss dabei so dimensioniert sein, dass er bei der verlangten Biegung noch nicht durch die in ihm entstehenden Spannungen beschädigt wird, andererseits aber gegenüber den Querkräften bei beginnender Instabilität des Wickelkörpers 4 ausreichend steif ist. Die Biegesteifigkeit des Stabs 2 wird dadurch erhöht, dass er aus unidirektional glasfaserverstärktem Kunststoff besteht.

An den beiden Endbereichen des Wickelkörpers 4, an denen die Anschlussteile 23 und 24 befestigt sind, weist der Wickelkörper 4 einen durchgehenden Rand auf, der durch Umwickeln der Enden des Wickelkörpers 4 mit einem Faserstrang hergestellt ist. Zwischen dem Rand des Wickelkörpers 4 und dem Anschlussteil 23 bzw. 24, das aus einem Metall, z.B. Aluminium, besteht, ist eine Schicht 27 aus elastomerem Material, z.B. einem synthetischen Kautschuk, wie Perbunan, vorgesehen. Mit der Elastomer-Schicht 27 wird im Bereich kleiner Drehmomente eine nichtlineare Torsionssteifigkeit erreicht, wie sie bei der Anwendung für die geschilderte Sicherheitslenksäule für die Dämpfung bzw. Filterung von Schwingungen von Vorteil ist. Bei kleinen Relativbewegungen zwischen dem Wickelkörper 4 und den Anschlussteilen 23 und 24 wird die Elastomerschicht 27 dabei nur auf Schub beansprucht. Bei grösseren Relativbewegungen bewirkt der Formschluss, der durch die Sechskantausbildung des Wickelkörpers 4 und die entsprechende Sechskantausbildung der Anschlussteile 23 und 24 erzeugt wird, eine zusätzliche Zusammendrückung der Elastomerschicht 27 und damit eine Erhöhung der Torsionssteifigkeit.

Das Bauelement 1 kann je nach Anwendungszweck und den geforderten Werten für Drehmoment und Biegewinkel vielfach variiert und den verschiedensten Anwendungen angepasst werden. Zum Beispiel ist es möglich, als Fasern des faserverstärkten Kunststoffs des Wickelkörpers 4 Glasfasern, Aramidfasern, Kohlenstoffasern oder Metallfasern zu verwenden, während die Kunststoffmatrix aus Epoxydharzen, Polyesterharzen oder Polyamidharzen gebildet sein kann.

Weiterhin kann der Orientierungswinkel der Gitterstäbe 6 gegenüber der Längsrichtung des Wickelkörpers 4 zwischen mehr als 55° bis annähernd 90°, d.h. soweit sich noch eine gitterförmige Struktur erhalten lässt, variiert werden, wobei die Biegeweichheit mit zunehmendem Orientierungswinkel grösser wird. Auch kann die Querschnittsform des Wickelkörpers 4 geändert werden, wobei bei polygonalem Querschnitt (Achteck, Sechseck, Fünfeck, Viereck, Dreieck) der erwähnte Formschluss mit den Anschlussteilen 23 und 24 von Vorteil ist, ferner die vorstehend im Zusammenhang mit den Figuren 2 bis 4 geschilderte relativ einfache Ausbildung des Wickeldorns. Demgegenüber hat ein kreisförmiger Querschnitt des Wickelkörpers 4 den Vorteil, dass man im Gegensatz zum polygonalen Querschnitt nicht an ein bestimmtes Mehrfach-Muster gebunden ist, also an ein Dreifach-Muster beim sechseckigen Querschnitt bzw. an ein Vierfach-Muster beim achteckigen Querschnitt des Wickelkörpers 4 bzw. des Dorns, vielmehr jedes beliebige Muster wickelbar ist.

Die Biegeweichheit ist ferner durch die Dimensionierung der Gitterstäbe 6, insbesondere durch das Ausmass der Vervielfachung der Höhe der Gitterstäbe gegenüber ihrer Breite, an den jeweiligen Anwendungszweck anpassbar, jedoch auch durch andere Dimensionierungsparameter, beispielsweise Länge und Durchmesser des Wickelkörpers 4. Die Zahl der Lagen des Faserstrangs 8 zum Gesamtwickelgut soll im allgemeinen möglichst gross sein, da dadurch die Zahl der Scherflächen in den Kreuzungsstellen 7 zwischen den einzelnen Faserstranglagen erhöht wird, weshalb bevorzugt Faserstränge 18 mit möglichst geringer Einzelfaserzahl gewählt werden, soweit dies von der Herstellungszeit her vertretbar ist.

**Patentansprüche**

1. Bauelement zur Übertragung von Drehmomenten zwischen in einem Winkel zueinander stehender Wellen (3, 5), insbesondere für eine Sicherheitslenkung mit abgeknickter Lenksäule, mit einem Wickelkörper (4) aus faserverstärktem Kunststoff mit Gitterstäben (6) aus Lagen eines kreuzweise gewickelten kunststoffgetränkten Faserstrangs (18), dadurch gekennzeichnet, dass die Höhe der Gitterstäbe (6) grösser ist als deren Breite und der Orientierungswinkel ($\alpha$) der Gitterstäbe (6) gegenüber der Längsachse des Wickelkörpers (4) mehr als 55° beträgt.

2. Bauelement nach Anspruch 1, dadurch gekennzeichnet, dass die Höhe der Gitterstäbe (6) wenigstens das Dreifache von deren Breite beträgt.

3. Bauelement nach Anspruch 1 oder 2, dadurch gekennzeichnet, dass der Orientierungswinkel der Gitterstäbe (6) 70 bis 85° beträgt.

4. Bauelement nach einem der Ansprüche 1 bis 3, dadurch gekennzeichnet, dass im Wickelkörper (4) ein biegeelastischer Stab (22) mit einer oder mehreren in Richtung der Längsachse des Wickelkörpers (4) im Abstand voneinander angeordneten, an der Innenseite des Wickelkörpers (4) angreifenden Abstützungen (26) vorgesehen ist.

5. Bauelement nach Anspruch 4, dadurch gekennzeichnet, dass der Stab (22) aus unidirektional faserverstärktem Kunststoff besteht.

6. Bauelement nach einem der vorstehenden Ansprüche, dadurch gekennzeichnet, dass die beiden Enden des Wickelkörpers (4) mit einem durchgehenden Rand versehen sind, an dem die Anschlussteile (23 und 24) für die Wellen (Antriebswelle 5 und Lenkspindel 3) befestigbar sind.

7. Bauelement nach Anspruch 6, dadurch gekennzeichnet, dass der Wickelkörper (4) zumindest im Bereich der Anschlussteile (23 und 24) einen gleichmässig polygonalen Querschnitt aufweist.

8. Bauelement nach Anspruch 6 oder 7, dadurch gekennzeichnet, dass zwischen dem Rand des Wickelkörpers (4) und den Anschlussteilen (23 und 24) eine Schicht (27) aus elastomerem Material vorgesehen ist.

9. Dorn zum Wickeln eines Bauelementes nach einem der Ansprüche 1 bis 8, gekennzeichnet durch kreuzweise um den Dorn verlaufende Nuten (14) zur Aufnahme des Faserstrangs (18) mit einer der Faserstrangbreite entsprechenden Nutbreite.

10. Dorn nach Anspruch 9, dadurch gekennzeichnet, dass die Breite der Nuten (14) vom Nutgrund (19) zur Nutöffnung (20) hin zunimmt.

11. Dorn nach Anspruch 9 oder 10, dadurch gekennzeichnet, dass er aus einem Kern (8) und mehreren um den Kern (8) angeordneten Formleisten (9 bis 11) besteht, wobei die Formleisten (9 bis 11) mit Nuten (14) versehen sind, die Abschnitte der kreuzweise um den Dorn verlaufenden Nuten bilden.

## Revendications

1. Elément destiné à la transmission de couples entre des arbres (3, 5) faisant un angle l'un avec l'autre, en particulier pour une direction de sécurité avec une colonne de direction brisée, comprenant un corps bobiné (4) en matière plastique renforcée par fibres avec des barreaux de grille (6) formés de couches d'une mêche de fibres (18) imprégnée de matière plastique et enroulée croisée, caractérisé en ce que la hauteur des barreaux de grille (6) est plus importante que leur largeur et que l'angle d'orientation ($\alpha$) des barreaux de grille (6) par rapport à l'axe longitudinal du corps bobiné (4) est supérieur à 55°.

2. Elément selon la revendication 1, caractérisé en ce que la hauteur des barreaux de grille (6) représente au moins le triple de leur largeur.

3. Elément selon la revendication 1 ou 2, caractérisé en ce que l'angle d'orientation des barreaux de grille (6) est compris entre 70 et 85°.

4. Elément selon l'une des revendications 1 à 3, caractérisé en ce qu'il est prévu dans le corps bobiné (4) une tige (22) flexible comportant un ou plusieurs supports (26) espacés les uns des autres dans la direction de l'axe longitudinal du corps bobiné (4) et coopérant avec le côté intérieur du corps bobiné (4).

5. Elément selon la revendication 4, caractérisé en ce que la tige (22) est en matière plastique renforcée unidirectionnellement par des fibres de verre.

6. Elément selon l'une des revendications précédentes, caractérisé en ce que les deux extrémités du corps bobiné (4) sont munies d'un bord continu sur lequel peuvent être fixées les pièces de raccordement (23 et 24) pour les arbres (arbre d'entraînement 5 et arbre de direction 3).

7. Elément selon la revendication 6, caractérisé en ce que le corps bobiné (4) présente une section transversale polygonale régulière au moins dans la zone des pièces de raccordement (23 et 24).

8. Elément selon la revendication 6 ou 7, caractérisé en ce qu'il est prévu, entre le bord du corps bobiné (4) et les pièces de raccordement (23 et 24), une couche (27) en matériau élastomère.

9. Mandrin destiné au bobinage d'un élément selon l'une des revendications 1 à 8, caractérisé par des rainures (14) s'étendant autour du mandrin en se croisant, lesdites rainures étant destinées à recevoir la mêche de fibres (18) et ayant une largeur correspondant à la largeur de la mêche de fibres.

10. Mandrin selon la revendication 9, caractérisé en ce que la largeur des rainures (14) augmente du fond (19) des rainures en direction de l'ouverture (20) des rainures.

11. Mandrin selon la revendication 9 ou 10, caractérisé en ce qu'il est composé d'un noyau (8) et de plusieurs baguettes profilées (9 à 11) placées autour du noyau (8), les baguettes profilées (9 à 11) étant munies de rainures (14) qui forment des sections des rainures s'étendant autour du mandrin en se croisant.

## Claims

1. Component part for the transmission of torques between shafts (3, 5) which are arranged at an angle to one another, more especially for safety steering means having a kinked steering column, comprising a wound body (4) made of fibre-reinforced plastics material having lattice bars (6) consisting of layers of a plastics-impregnated fibre strand (18) wound in a crosswise manner, characterised in that the height of the lattice bars (6) is greater than the width thereof and the orientation angle ($\alpha$) of the lattice bars (6) relative to the longitudinal axis of the wound body (4) amounts to more than 55°.

2. Component part according to claim 1, characterised in that the height of the lattice bars (6) amounts to at least three times the width thereof.

3. Component part according to claim 1 or 2, characterised in that the orientation angle of the lattice bars (6) amounts to 70 up to 85°.

4. Component part according to one of claims 1 to 3, characterised in that provided in the wound body (4) is a flexurally elastic bar (22) having one or more supports (26) which are arranged at a spacing from one another in the direction of the longitudinal axis of the wound body (4) and which act on the inside of the wound body (4).

5. Component part according to claim 4, characterised in that the bar (22) consists of unidirectionally fibrereinforced plastics material.

6. Component part according to one of the preceding claims, characterised in that the two ends of the wound body (4) are provided with a continuous edge, to which the connection parts (23 and 24) for the shafts (driving shaft 5 and steeringwheel spindle 3) can be fastened.

7. Component part according to claim 6, characterised in that the wound body (4) has, at least in the region of the connection parts (23 and 24), a uniformly polygonal cross-section.

8. Component part according to claim 6 or 7, characterised in that a layer (27) of elastomeric material is provided between the edge of the wound body (4) and the connection parts (23 and 24).

9. Mandrel for winding a component part according to one of claims 1 to 8, characterised by grooves (14), extending crosswise around the mandrel for the reception of the fibre strand (18) and having a groove width corresponding to the width of the fibre strans.

10. Mandrel according to claim 9, characterised in that the width of the grooves (14) increases from the bottom (19) of each groove towards the mouth (20) of each groove.

11. Mandrel according to claim 9 or 10, characterised in that it consists of a core (8) and several shaping strips (9 to 11) arranged around the core (8), the shaping strips (9 to 11) being provided with grooves (14) which form portions of the grooves extending crosswise around the mandrel.

1/3

FIG. 1

FIG. 2

2/3

FIG. 3

FIG. 4

FIG. 5

FIG.6